# NEUE EUROPÄISCHE PATENTSCHRIFT

(11) **EP 0 897 964 B2**
(45) Veröffentlichungstag und Bekanntmachung des Hinweises auf die Entscheidung über den Einspruch: **26.09.2007**
(45) Hinweis auf die Patenterteilung: 03.12.2003
(21) Anmeldenummer: 98115177.2
(22) Anmeldetag: 12.08.1998
(51) Int. Cl.: C09D 201/00, C09D 5/00, B05D 5/00, C09D 101/08

(54) **Polymerer Schutzfilm zur Entfernung von Verschmutzungen und Verfahren zu seiner Herstellung**
Proctective polymer film to remove soil and process for producing the same
Film polymère de protection pour l'enlèvement des salissures et procédé pour sa production

(30) Priorität: 21.08.1997 DE 19736452
(43) Veröffentlichungstag der Anmeldung: 24.02.1999
(73) Patentinhaber: Fraunhofer-Gesellschaft zur Förderung der angewandten Forschung e.V., 80686 München (DE)
(72) Erfinder: Loth, Fritz, Dr., 14513 Teltow (DE); Wildenhain, Martin, Dr., 12687 Berlin (DE); Kupfer, Michael, Dr., 10243 Berlin (DE)
(74) Vertreter: Olgemöller, Luitgard Maria

(56) Entgegenhaltungen:
- EP-A- 0 400 484
- WO-A-95/25604
- JP-A- 59 186 668
- US-A- 5 017 237
- US-A- 5 093 485
- US-A- 5 118 747
- US-A- 5 418 006
- US-A- 5 658 622
- PATENT ABSTRACTS OF JAPAN vol. 009, no. 041 (C-267), 21. Februar 1985 (1985-02-21) & JP 59 186668 A (FUROINTO SANGYO KK), 23. Oktober 1984 (1984-10-23)
- The Merck Index, 11.Auflage, 1989, Seite 769

## Beschreibung

Die vorliegende Erfindung betrifft einen hydrophilen Schutzfilm auf Basis natürlicher Polymere, der u. a. die leichtere Entfernung von Verschmutzungen von Oberflächen, insbesondere Lacken und Farben von Gebäudefassaden, Denkmälern und Fahrzeugen oder dergleichen ermöglicht.

In den letzten Jahren hat die mutwillige Verschmutzung von Gebäudefassaden, Denkmälern, öffentlichen Innenräumen und Verkehrsmitteln durch Besprühen mit Lacken und Farben stark zugenommen. Um solche Verunreinigungen wirksam zu entfernen, sind meist gesundheitsschädliche Lösungsmittel erforderlich, die die Farben an- oder auflösen. Der durch die Beseitigung solcher Verschmutzungen und die Neugestaltung der betroffenen Oberflächen jährlich entstehende Schaden ist beträchtlich. Zur Reduzierung des Aufwandes für die Schadensbeseitigung wurden verschiedene Schutzschichten entwickelt, die entweder die Haftung der Verschmutzung auf dem Untergrund verringern sollen oder später zusammen mit der Verschmutzung entfernt werden.

So wurden beispielsweise Beschichtungen mit Wachsen, Siliconen oder synthetischen Fluorpolymeren vorgeschlagen, die durch ihre hydrophobe Natur die Haftung der Verschmutzung verringern und damit deren Entfernung erleichtern sollen. Die Effekte sind jedoch meist nur unbefriedigend.

Ein anderes Konzept beruht darauf, wasserlösliche oder in Wasser quellbare Polymere als temporäre Schutzschicht zu verwenden, die mit Wasser zusammen mit der Verschmutzung abgewaschen werden. Neben synthetischen Polymeren, wie z. B. Polyvinylalkohol (DE 4208646, FR 2607821), werden hierfür vor allem Polysaccharide eingesetzt. Auch Siloxan-Emulsionen, die Xanthan-Gummi als Verdickungsmittel enthalten, werden vorgeschlagen (FR 2684682). So wird bereits in der JP 59-186668 ein Verfahren zum temporären Schutz von Oberflächen beschrieben, bei dem wasserlösliche Polymere, wie z. B. Methylcellulose, Stärke oder Polyvinylalkohol, als Lösung auf die zu schützenden Oberflächen aufgetragen werden. Auch hydrophile aber wasserunlösliche Pulver, wie z. B. Zellstoffpulver, werden zu diesem Zweck eingesetzt.

So wird im JP-Abstract mit der Veröffentlichungs-Nr. 5 918 6668 eine Schutzschicht beschrieben, die aus einem wasserunlöslichen Polymer wie Methylcellulose gebildet und mit einer aufgesprühten Schicht eines organischen, wasserunlöslichen, aber quellfähigen Pulvers überschichtet wird.

Die erhaltenen Schutzschichten werden anschließend durch kräftiges Abspülen mit Wasser oder Abwischen wieder entfernt. In der Patentschrift EP 0365584 wird ein Verfahren zur Entfernung von Kontaminationen beansprucht, das ebenfalls auf der Verwendung von Polysaccharid-Lösungen basiert. Dieses Verfahren besteht darin, daß die Polysaccharide in gelöster Form auf die zu schützende Oberfläche aufgetragen werden, durch Trocknung der Lösung ein Film erzeugt wird, dieser - nach der Verschmutzung - mit einer Flüssigkeit, insbesondere Wasser, behandelt wird, die den Film wieder auflöst oder quillt, und die unerwünschte Verunreinigung dann mit.dem gelösten oder gequollenen Film entfernt wird. Als Polysaccharide werden Cellulose und Cellulosederivate, Stärke und Stärkederivate, Pflanzenpolysaccharide, mikrobielle Polysaccharide, Pektin, Inulin und Algen-Polysaccharide genannt.

Wesentlichste Nachteile aller dieser Verfahren sind, daß die löslichen Polysaccharide im Freien sowohl von starkem Regen zum großen Teil abgewaschen werden als auch bei länger anhaltender feuchter Witterung z. T. mikrobiologisch abgebaut werden, wodurch nicht nur unschöne Verfärbungen auftreten können, sondern auch der Schutz und die Entfernbarkeit der Verunreinigungen beeinträchtigt werden. Weiterhin ist die Lagerfähigkeit der zubereiteten Polysaccharid-Lösungen sehr begrenzt. Ein durch die EP 0365584 geschütztes auf dem Markt erhältliches Produkt (PSS 20) (Bautenschutz Bausanierung 16(1993)7, 35-37), das aus der wäßrigen Lösung eines pflanzlichen Polysaccharid-Gemisches besteht enthält zusätzlich das Konservierungsmittel Methylparaben (Oxybenzoesäuremethylester), Natrium-Bisulfit als Verfärbungsinhibitor und ein neutrales Reinigungsmittel. Hierdurch soll zum einen das Problem der biologischen Anfälligkeit sowohl der anwendungsgerechten Lösung als auch des aufgetragenen Schutzfilmes unterdrückt und die Ablösbarkeit des Filmes verbessert werden. Diese Zusatzstoffe werden jedoch relativ schnell ausgewaschen und verlieren dann ihre Wirkung. Auch müssen zur Erzielung einer längeranhaltenden Wirkung der Schutzschicht Mehrfachschichten aufgetragen werden, wobei jeweils eine Zwischentrocknung notwendig ist. Nachteilig bei den angeführten Polysaccharid-Beschichtungen ist außerdem, daß sie bei feuchtem oder regnerischem Wetter Wasser absorbieren und sich dann schmierig und glitschig anfühlen.

Aufgabe der vorliegenden Erfindung ist es daher, einen polymerer Schutzfilm mit verbesserten Eigenschaften zu entwickeln, der auch auf der Witterung ausgesetzten Flächen im Außenbereich die leichte Entfernung ungewünschter Verschmutzungen gewährleistet.

Erfindungsgemäß wird die Aufgabe dadurch gelöst, daß als Schutzfilm ein Mehrschichtensystem gemäß Anspruch 1 auf Basis von hydrophilen Polymeren verwendet wird. Der Schutzfilm umfaßt mindestens eine in kaltem oder heißem Wasser lösliche oder quellbare polymere Grundierung und hierauf eine wasserunlösliche, aber wasserdampfdurchlässige Polymer-Membran.

Die hydrophilen Polymere der vorliegenden Erfindung sind bevorzugt natürliche Polymere. Bei der wasserdampfdurchlässigen Polymer-Membran handelt es sich um eine Polyelektrolytkomplex-Schicht.

Als in kaltem oder heißem Wasser lösliche oder quellbare natürliche Polymere für die Grundierung können (A) Polymere mit kationischen oder anionischen Gruppen verwendet werden. Beispielsweise eignen sich Polysaccharide mit anionischen Gruppen, wie z. B. Carboxymethylcellulose, Sulfoethylcellulose, Cellulosesulfat, Stärkesulfat, Stärkephosphat, Carboxymethylstärke, Alginat. Pektin, oder Polymere mit anionischen und kationischen Gruppen (Polyampholyte), wie z. B. Proteine, insbesondere Gelatine. Diese Substanzen können allein oder in Mischung verwendet werden. Es können statt dessen aber auch kationische Polymere, z . B. kationische Polysaccharide, verwendet werden.

In einer bevorzugten Ausgestaltung der Erfindung werden der Grundierung zusätzlich (B) weitere Polymere mit nichtionischen Gruppen, wie z. B Methylcellulose, Hydroxyethylcellulose, Hydroxypropylcellulose und entsprechende Mischether, lösliche Stärke, Hydroxyethylstärke, Stärkeacetat, Dextran, Polyvinylalkohol oder Mischungen hiervon zugesetzt. Es hat sich gezeigt, daß der Zusatz der nichtionischen Polymeren eine verbesserte Ablösbarkeit der Schutzschicht bewirkt.

Das Mischungsverhältnis von anionischen (A) zu nichtionischen Polymeren (B) in der Grundierung kann unter Berücksichtigung des jeweiligen Substitutionsgrades der anionischen Polymerkomponente in weiten Grenzen variiert werden. Bevorzugt liegt der Anteil von (A) bei mindestens etwa 5 Masse-% (A), bezogen auf (A+B), besonders bevorzugt bei mindestens etwa 10 Masse-%.

Die wasserunlösliche Polyelektrolytkomplex-Schicht wird aus der geladenen Komponente der Grundierung (A) und einer entgegengesetzt geladenen Komponente (C) gebildet. Wenn die Komponente (A) der Grundierung negativ geladene Polymere enthält, werden kationische Polymere (C) eingesetzt, z.B. mindestens eines der bekannten Polymere mit primären, sekundären und tertiären Aminogruppen oder quartären Ammoniumgruppen, die sich in Wasser oder verdünnten Säuren lösen und beim Trocknen einen mechanisch stabilen Film ergeben. Es eignen sich beispielsweise synthetische oder natürliche kationische Polysaccharide oder Proteine. Ein erfindungsgemäß bevorzugtes kationisches Polymer ist Chitosan (Poly-β-(1->4)-D-glucosamin). Wird in der Grundierung positiv geladenes Polymer verwendet, müssen natürlich negativ geladene Polymere für die Erzeugung der Polyelektrolytkomplex-Schicht vorgesehen werden. Hierzu könnten dann die unter (A) genannten Substanzen mit anionischen Gruppen verwendet werden.

Die Polyelektrolytkomplex-Schicht hat den Charakter einer semipermeablen Membran, die für Wasserdampf durchlässig, für die löslichen oder quellbaren Polymere der Grundierung jedoch undurchlässig ist. Neben der Wahl des oder der kationischen bzw. anionischen Polymeren können dessen Molekulargewicht und Ionisierungsgrad variiert werden. Der Komponente (C) können des weiteren zur Polyelektrolytkomplexbildung befähigte hoch- oder niedermolekulare Substanzen zugesetzt werden, die gleichsinnig geladen sind. Bei einer kationischen Komponente (C) können dies z. B. Polydiallyldimethylammoniumchlorid, Polyethylenimin, Polyvinylamin, Polyacrylamid, kationische Stärke bzw. Kationtenside oder organische Farbstoffe mit quartären Ammoniumgruppen sein. Bei Verwendung von durch Deacetylierung von Chitin hergestellten technischen Chitosan-Produkten z.B. können die primären Aminogruppen noch bis zu ca. 30 %. acetyliert sein.

Die Herstellung der Schutzschicht erfolgt erfindungsgemäß in Stufen. Zunächst wird die für die Grundierung verwendete, ionische Gruppen enthaltende Polymerkomponente (A) gelöst oder dispergiert, bevorzugt in Wasser. Gegebenenfalls werden die nichtionischen Polymere (B) entweder direkt der entstandenen Lösung oder Dispersion zugemischt oder ihrerseits zuerst gelöst bzw. dispergiert, worauf die Mischungen zusammengegeben werden. Die gegensinnig geladene Komponente (C) wird ebenfalls in die Form einer derartigen Lösung oder Dispersion gebracht. Die Lösung oder Dispersion des Bestandteils (A) oder der Bestandteile (A+B) wird sodann auf die zu schützende Oberfläche aufgetragen. Unmittelbar anschließend oder nach Zwischentrocknung wird die Lösung oder Dispersion der Komponente (C) aufgebracht. Das Aufbringen beider Lösungen oder Dispersionen erfolgt in bekannter Weise, z.B. mittels Pinsel, Bürste oder am günstigsten durch Aufsprühen. Für die Verarbeitung der beiden Lösungen oder Dispersionen haben sich Polymerkonzentrationen von z.B. etwa 0,5 bis 20 Masse-% als vorteilhaft erwiesen. Die auf die zu schützende Oberfläche aufzubringende Menge an Polymerlösung oder -dispersion beträgt für die Grundierung erfahrungsgemäß etwa 100 bis 1000 g/m² und für die Deckschicht erfahrungsgemäß etwa 50 bis 500 g/m². Gegebenenfalls kann die Grundierung auch in zwei oder mehreren Arbeitsgängen aufgetragen werden. Die Schichtdicke des gesamten Schutzfilmes sollte erfindungsgemäß 5 bis 200 µm, vorzugsweise 10 bis 100 µm betragen, wobei die jeweiligen Werte je nach Untergrund und Schutzzweck auch nach unten oder oben abweichen können.

Es ist in einer speziellen Ausgestaltung der Erfindung auch möglich, die Schutzschicht durch mehrfaches wechselweises Aufbringen der Komponente (A) oder der Mischung aus (A) und (B) und der gegensinnig geladenen Komponente (C) auszubilden, wobei bevorzugt die obigen Konzentrationen und Schichtdicken eingehalten werden. Diese Variante kann insbesondere gewählt werden, um einen "Zwiebelschaleneffekt" zu erreichen: Eine Verschmutzung kann durch Entfernen der obersten Schutzschicht-"Schale" aus wasserlöslicher oder -quellbarer Grundierung und in Wasser unlöslicher, jedoch wasserdampfdurchlässiger Polymer-Membran beseitigt werden. Auf der Wand oder dgl. verbleibt oder verbleiben dann noch eine weitere oder noch mehrere der "Schalen", so daß die Wand mehrfach gereinigt werden kann, ohne daß es einer erneuten Beschichtung mit dem erfindungsgemäßen Schutzfilm bedarf.

Überraschenderweise konnte festgestellt werden, daß der erfindungsgemäße Schutzfilm in Gegenwart von Feuchtigkeit mechanisch stabil ist, d. h. witterungsbeständiger und besser gegen mikrobilogischen Abbau geschützt ist als die bisher bekannten Schutzschichten auf Polysaccharidbasis, und trotzdem die leichte und vollständige Entfernung von Verschmutzungen, insbesondere Graffiti-Schmierereien, von den beschichteten Oberflächen gewährleistet. Weiterhin ist der Schutzfilm umweltverträglich, verändert das Aussehen und die Struktur der zu schützenden Flächen nicht und läßt sich in einfacher Weise herstellen und aufbringen. Der erfindungsgemäße Schutzfilm schützt darüberhinaus die von ihm bedeckten Oberflächen vor der Einwirkung von Luftverschmutzungen wie z. B. SO₂ und NOₓ und ist daher auch für den Denkmalschutz geeignet.

Der entscheidende Unterschied und zugleich Vorteil der Kombination der beiden genannten Schichten gegenüber den bekannten Schutzfilmen besteht darin, daß beim Kontakt der beiden Lösungen oder Dispersionen mit den entgegengesetzt geladenen Polymerkomponenten unmittelbar durch ionische Vernetzung der beschriebene unlösliche Polyelektrolytkomplexfilm entsteht. Dieser Film stellt eine in Wasser unlösliche, aber für Wasserdampf durchlässige Membran dar. Die Membran verhindert, daß unter normalen Witterungsbedingungen die darunterliegende Schicht des wasserlöslichen oder quellbaren Polymers herausgelöst oder soweit angelöst wird, daß der Film schmierig wird oder sich ablöst. Außerdem wird sowohl durch die Membranstruktur des Schutzfilmes als auch durch die teilweise noch vorhandenen kationischen Ladungen an der Membranoberfläche verhindert, daß enzymhaltige Bakterien oder Pilze durch oder in den Schutzfilm dringen und einen mikrobiologischen Abbau desselben bewirken.

Bei Behandlung des Schutzfilmes mit einem erwärmten Hochdruckwasserstrahl oder mit Heißdampf läßt sich dieser leicht vom Untergrund wieder entfernen. Somit ist der erfindungsgemäße polymere Schutzfilm hervorragend geeignet, um Graffiti-Schmierereien von Gebäudefassaden, Denkmälern und Fahrzeugen zu entfernen.

Die nachfolgenden Beispiele sollen die Erfindung näher erläutern.

### Beispiel 1:

Aus handelsüblicher mittelviskoser Carboxymethylcellulose und handelsüblicher hochviskoser Methylcellulose wurden jeweils 2 masse-%ige wäßrige Lösungen hergestellt und im Verhältnis 1 : 9 miteinander vermischt. Von dieser Mischung wurden mit Hilfe einer Sprühvorrichtung ca. 400 g/m² auf eine Sandsteinplatte aufgetragen. Nach 24 h wurde eine Hälfte der Platte abgedeckt und auf die andere Hälfte in gleicher Weise auf die Grundierung eine 2 masse-%ige wäßrige Lösung von Chitosan, gelöst in 2 %iger Essigsäure, in einer Menge von ca. 200 g/m² aufgesprüht. Nach weiteren 24 h Trocknung bei Raumtemperatur wurden beide Hälften der Platte partiell mit Reparaturlack auf Acrylatbasis (orange) besprüht und mit einem Filzstift (schwarz) bemalt. Nach 72 h wurden die Schutzschichten mit Hilfe eines Hochdruckwasserstrahles (40 bar, 60 °C) entfernt.

Die erfindungsgemäße Schutzschicht mit Chitosan ließ sich zusammen mit den Farben einfach und ohne Rückstände entfernen. Nach der Trocknung waren visuell keine Veränderungen der Sandsteinoberfläche zu erkennen. Auch durch die Beschichtung selbst wurde das Aussehen des Sandsteines nicht verändert.

Die nur aus der Grundierung bestehende Schicht aus Methylcellulose und Carboxymethylcellulose fühlte sich nach der Befeuchtung schnell glitschig und schmierig an.

Nur mit einer 2 masse-%igen Chitosanlösung in einer Menge von 200 g/m² beschichtete Sandsteinplatten ließen sich ebenso wie unbeschichtete Platten in der beschriebenen Weise praktisch nicht reinigen.

Auch Beschichtungen mit Methylcellulose und Carboxymethylcellulose allein ohne Deckschicht brachten nicht den gewünschten Erfolg.

### Beispiel 2

Aus handelsüblicher Gelatine und handelsüblicher hochviskoser Methylcellulose wurden jeweils 2 masse-%ige wäßrige Lösungen hergestellt und im Verhältnis 1 : 9 miteinander vermischt. Von dieser Mischung wurden mit Hilfe einer Sprühvorrichtung ca. 400 g/m² auf eine Sandsteinplatte aufgetragen. Nach 24 h wurden nochmals 200 g/m² dieser Lösung aufgetragen. Nach weiteren 24 Stunden wurde eine Hälfte der Platte abgedeckt und in gleicher Weise auf die Grundierung eine 3 masse-%ige wäßrige Lösung von Chitosanacetat in einer Menge von ca. 150 g/m² aufgesprüht. Nach 24 h Trocknung bei Raumtemperatur wurden beide Hälften der Platte partiell mit verschiedenen Farben (Reparaturlack schwarz, blau, rot) besprüht. Nach 72 h wurden die Schutzschichten mit Hilfe eines Hochdruckwasserstrahles (40 bar, 60 °C) entfernt. Die erfindungsgemäße Schutzschicht mit Chitosan ließ sich zusammen mit den Farben einfach und ohne Rückstände entfernen. Nach der Trocknung waren im Vergleich zu unbehandeltem Sandstein visuell keine Veränderungen der Sandsteinoberfläche zu erkennen.

Die ausschließlich aus der Grundierung bestehende Schutzschicht aus Gelatine und Methylcellulose fühlte sich nach der Befeuchtung schnell schmierig und glitschig an. Die restlose Entfernung der Farben aus den Sandsteinporen war im Vergleich zu der mit Chitosan beschichteten Grundierung deutlich erschwert.

### Beispiel 3:

Analog Beispiel 2 wurde Sandstein beschichtet, wobei an Stelle der Gelatine-Methylcellulose-Lösung eine Mischung aus 2 Teilen einer 2-%igen Na-Alginat-Lösung und 8 Teilen einer 10-%igen Polyvinylalkohol-Lösung eingesetzt wurde.

Es wurden vergleichbare Ergebnisse erzielt.

### Beispiel 5:

Analog Beispiel 2 wurde Sandstein beschichtet, wobei an Stelle der 3-%igen Chitosan-Lösung eine Mischung aus einer 3-%igen Chitosan-Lösung und einer 3-%igen Lösung von kationischer Stärke im Verhältnis 1 : 2 eingesetzt wurde.

Es wurden vergleichbare Ergebnisse erzielt.

### Beispiel 6:

Analog Beispiel 1 wurde Sandstein beschichtet, wobei die 2-%ige Chitosan-Lösung noch zusätzlich 2 Masse-%, bez. auf die Lösung, Polydimethyldiallylammonium-chlorid enthielt.

Es wurden vergleichbare Ergebnisse erzielt.

### Beispiel 7:

Analog Beispiel 1 wurde Sandstein beschichtet, wobei die 2-%ige Chitosan-Lösung noch zusätzlich 2 Masse-%, bez. auf die Lösung, Hexadecyltrimethylammonium-chlorid enthielt.

Es wurden vergleichbare Ergebnisse erzielt.

Die Erfindung betrifft einen polymeren Schutzfilm, insbesondere zur leichteren Entfernung von Graffiti und anderen Verschmutzungen von Gebäudefassaden, Denkmälern und Fahrzeugen und dergleichen, der eine in kaltem oder heißem Wasser lösliche oder quellbare polymere Grundierung und eine darauf befindliche, in Wasser unlösliche, jedoch wasserdampfdurchlässige Polymer-Membran umfaßt, sowie ein Verfahren zu seiner Herstellung. Der erfindungsgemäße Schutzfilm besteht vorzugsweise aus umweltverträglichen natürlichen Polymeren und zeichnet sich durch gute mechanische Eigenschaften, Stabilität und eine leichte Entfernbarkeit aufgebrachter Verunreinigungen mit Wasser oder Wasserdampf aus. Das entsprechende Herstellungsverfahren basiert auf dem Auftragen wäßriger Lösungen der erfindungsgemäßen Polymerkomponenten und der hierbei stattfindenden Ausbildung einer wasserundurchlässigen wasserdampfdurchlässigen Polyelektrolytkomplexmembran.

## Patentansprüche

1. Auf einem Substrat haftender, polymerer Schutzfilm, umfassend
(1) eine in Wasser lösliche oder quellbare polymere Grundierung und auf dieser
(2) eine in Wasser unlösliche, jedoch wasserdampfdurchlässige Polymer-Membran,
**dadurch gekennzeichnet, daß** die Grundierung (1) mindestens ein ionische Gruppen enthaltendes, in Wasser lösliches oder quellbares Polymer (A), sowie gegebenenfalls zusätzlich mindestens ein ungeladenes wasserlösliches oder quellbares Polymer (B) enthält oder aus dieser bzw. diesen Komponenten besteht und die Polymer-Membran (2) einen wasserunlöslichen, aber wasserdampfdurchlässigen Polyelektrolytkomplex des Polymers oder der Polymere (A) mit mindestens einem entgegengesetzt geladenen Polymer (C) aufweist oder aus diesen besteht.

2. Polymerer Schutzfilm nach Anspruch 1, **gekennzeichnet dadurch, daß** das Polymer (A) ausgewählt ist unter natürlichen oder synthetischen Polysacchariden, Polysaccharidderivaten, Proteinen und Mischungen dieser Komponenten.und/oder daß das in Wasser lösliche oder quellbare nichtionische Gruppen enthaltende Polymer (B) der Grundierung ausgewählt ist unter Polysacchariden und Polysaccharidderivaten und Mischungen hiervon.

3. Polymerer Schutzfilm nach Anspruch 2, **gekennzeichnet dadurch, daß** das Polymer (A) ausgewählt ist unter Carboxymethylcellulose, Sulfoethylcellulose, Cellulosesulfat, Stärkesulfat, Stärkephosphat, Carboxymethylstärke, Alginat, Pektin, Gelatine und Mischungen hiervon und/oder daß das Polymer (B) ausgewählt ist unter Methylcellulose, Hydroxyéthylcellulose, Hydroxypropylcellulose, Methylhydroxyalkylcellulose, löslicher Stärke, Hydroxyethylstärke, Stärkeacetat, Dextran, Polyvinylalkohol und Mischungen hiervon.

4. Polymerer Schutzfilm nach einem der Ansprüche 1 bis 3, **gekennzeichnet dadurch, daß** das entgegengesetzt geladene Polymer (C) ein kationisches Polysaccharid ist.

5. Polymerer Schutzfilm nach Anspruch 4, **gekennzeichnet dadurch, daß** das kationische Polysaccharid ausgewählt ist unter Chitosan, kationischer Stärke und Mischungen hiervon und gegebenenfalls Zusätze mindestens eines weiteren kationischen Polymeren, wie z. B. Polydiallyldimethylammoniumchlorid, Polyethylenimin, Polyvinylamin oder Polyacrylamid und/oder mindestens eines Kationtensids mit quartären Ammoniumgruppen und/oder mindestens eines Farbstoffes mit quartären Ammoniumgruppen enthält.

6. Verfahren zur Herstellung eines polymeren Schutzfilmes nach einem der Ansprüche 1 bis 5, **gekennzeichnet dadurch, daß** eine Lösung oder Dispersion der polymeren Komponenten (A) und ggf. (B) für die Grundierung auf das ausgewählte Substrat aufgetragen, vorzugsweise aufgesprüht wird, die so erzeugte Schicht ggf. zwischengetrocknet wird und anschließend eine Lösung oder Dispersion der entgegengesetzt geladenen ionischen Polymerkomponente (C) aufgetragen, bevorzugt aufgesprüht wird, worauf der erzeugte Film getrocknet wird.

7. Verfahren nach Anspruch 6, **gekennzeichnet dadurch, daß** eine 0,5-20 masse-%ige Lösung oder Dispersion der polymeren Komponenten (A) und ggf. (B) in einer Gesamtmenge von 100 bis 1000 g/m² aufgetragen wird und/oder daß eine 0,5-20 masse-%ige Lösung oder Dispersion der polymeren Komponente (C) in einer Menge von 50 bis 500 g/m² aufgetragen wird.

8. Verfahren zum Schützen von Oberflächen im Innen- und Außenbereich gegen mutwillig aufgebrachte Verschmutzungen oder die Einwirkung von Luftverschmutzung, **dadurch gekennzeichnet, daß** auf dem zu schützenden Substrat ein polymerer, durch Heißwasser oder Heißdampf ablösbarer Schutzfilm nach einem der Ansprüche 1 bis 5 aufgebracht wird.

9. Verwendung einer Kombination von Substanzen, umfassend:
(1) mindestens ein ionische Gruppen enthaltendes, in Wasser lösliches oder quellbares Polymer (A),
(2) mindestens ein entgegengesetzt geladenes Polymer (C) und
(3) gegebenenfalls mindestens ein ungeladenes Polymer (B), wobei die Komponenten (A) und (B) zusammen oder getrennt verpackt sein können und Komponente (C) getrennt von den anderen Komponenten verpackt ist,
zum Schutz von Oberflächen im Innen- und Außenbereich.

10. Verwendung einer Kombination von Substanzen nach Anspruch 9, wobei der Schutz der Oberflächen ein solcher vor mutwillig aufgebrachten Verschmutzungen wie Farben oder dergleichen oder ein Schutz gegen die Einwirkung von Luftverschmutzung ist.

11. Verwendung einer Kombination von Substanzen nach Anspruch 9 oder 10, **gekennzeichnet dadurch, daß** das Polymer (A) ausgewählt ist unter natürlichen oder synthetischen Polysacchariden, Polysaccharidderivaten, Proteinen und Mischungen dieser Komponenten und/oder daß das in Wasser lösliche oder quellbare nichtionische Gruppen enthaltende Polymer (B) der Grundierung ausgewählt ist unter Polysacchariden und Polysaccharidderivaten und Mischungen hiervon.

12. Verwendung einer Kombination von Substanzen nach Anspruch 11, **gekennzeichnet dadurch, daß** das Polymer (A) ausgewählt ist unter Carboxymethylcellulose, Sulfoethylcellulose, Cellulosesulfat, Stärkesulfat, Stärkephosphat, Carboxymethylstärke, Alginat, Pektin, Guar, Gelatine und Mischungen hiervon und/oder daß das Polymer (B) ausgewählt ist unter Methylcellulose, Hydroxyethylcellulose, Hydroxypropylcellulose, Methylhydroxyalkylcellulose, löslicher Stärke, Hydroxyethylstärke, Stärkeacetat, Dextran, Polyvinylalkohol und Mischungen hiervon.

13. Verwendung einer Kombination von Substanzen nach einem der Ansprüche 9 bis 12, **dadurch gekennzeichnet, daß** das entgegengesetzt geladene Polymer (C) ein kationisches Polysaccharid ist.

14. Verwendung einer Kombination von Substanzen nach Anspruch 13, **dadurch gekennzeichnet, daß** das kationische Polysaccharid ausgewählt ist unter Chitosan, kationischer Stärke und Mischungen hiervon und gegebenenfalls Zusätze mindestens eines weiteren kationischen Polymers, wie z.B. Polydiallyldimethylammoniumchlorid, Polyethylenimin, Polyvinylamin oder Polyacrylamid und/oder mindestens eines Kationtensids mit quartären Ammoniumgruppen und/oder mindestens eines Farbstoffes mit quartären Ammoniumgruppen enthält.

## Claims

1. Polymer protective film which adheres to a substrate, comprising
(1) a polymer undercoat which is soluble or can swell in water and upon the latter
(2) a polymer membrane which is insoluble in water but permeable to water vapour,
**characterised in that** the undercoat (1) contains at least one polymer (A) which contains ionic groups and is soluble or can swell in water and if necessary in addition at least one polymer (B) which is uncharged and water soluble or able to swell or comprises this or these components and the polymer membrane (2) has a polyelectrolyte complex, which is insoluble in water but permeable to water vapour, of the polymer or of the polymers (A) with at least one oppositely charged polymer (C) or comprises these.

2. Polymer protective film according to claim 1, **characterised in that** the polymer (A) is selected from natural of synthetic polysaccharides, polysaccharide derivatives, proteins and mixtures of these components, and/or **in that** the polymer (B) of the undercoat, which polymer is soluble or can swell in water and contains non-ionic groups, is selected from polysaccharides and polysaccharide derivatives and mixtures thereof.

3. Polymer protective film according to claim 2, **characterised in that** the polymer (A) is selected from carboxymethylcellulose, sulphoethylcellulose, cellulose sulphate, starch sulphate, starch phosphate, carboxymethylstarch, alginate, pectin, gelatine and mixtures thereof, and/or **in that** the polymer (B) is selected from methylcellulose, hydroxyethylcellulose, hydroxypropylcellulose, methylhydroxyalkylcellulose, soluble starch, hydroxyethylstarch, starch acetate, dextrane, polyvinyl aclohol and mixtures thereof.

4. Polymer protective film according to one of the claims 1 to 3, **characterised in that** the oppositely charged polymer (C) is a cationic polysaccharide.

5. Polymer protective film according to claim 4, **characterised in that** the cationic polysaccharide is selected from chitosan, cationic starch and mixtures thereof and if necessary contains additions of at least one further cationic polymer, such as e.g. polydiallyldimethylammoniumchloride, polyethylene imine, polyvinylamine or polyacrylamide and/or of at least one cationic surfactant with quaternary ammonium groups and/or of at least one colourant with quaternary ammonium groups.

6. Method for producing a polymer protective film according to one of the claims 1 to 5, **characterised in that** a solution or dispersion of the polymer components (A) and if necessary (B) is applied, preferably sprayed, for the undercoat on the selected substrate, the thus-produced layer is if necessary dried intermediately and subsequently a solution or dispersion of the oppositely charged ionic polymer component (C) is applied, preferably sprayed, whereupon which the produced film is dried.

7. Method according to claim 6, **characterised in that** a 0.5 - 20% by mass solution or dispersion of the polymer components (A) and if necessary (B) is applied in a total quantity of 100 to 1000 g/m², and/or **in that** a 0.5 - 20% by mass solution or dispersion of the polymer component (C) is applied in a quantity of 50 to 500 g/m².

8. Method for protecting surfaces in the internal and external region against maliciously applied soiling or the effect of air pollution, **characterised in that** a polymer protective film, which can be detached by hot water or hot vapour, is applied to the substrate to be protected, according to one of the claims 1 to 5.

9. Use of a combination of substances, comprising:
(1) at least one polymer (A) which contains ionic groups and is soluble or can swell in water,
(2) at least one oppositely charged polymer (C) and
(3) if necessary at least one uncharged polymer (B), the components (A) and (B) being able to be packed together or separately and component (C) being packed separately from the other components,
for the protection of surfaces in the internal and external region.

10. Use of a combination of substances according to claim 9, such a protection of the surfaces being against maliciously applied soiling, such as paints or the like, or protection against the effect of air pollution.

11. Use of a combination of substances according to claim 9 or 10, **characterised in that** the polymer (A) is selected from natural or synthetic polysaccharides, polysaccharide derivatives, proteins and mixtures of these components, and/or **in that** the polymer (B) of the undercoat, which polymer is soluble or can swell in water and contains non-ionic groups, is selected from polysaccharides and polysaccharide derivatives and mixtures thereof.

12. Use of a combination of substances according to claim 11, **characterised in that** the polymer (A) is selected from carboxymethylcellulose, sulphoethylcellulose, cellulose sulphate, starch sulphate, starch phosphate, carboxymethylstarch, alginate, pectin, guar, gelatine and mixtures thereof, and/or **in that** the polymer (B) is selected from methylcellulose, hydroxyethylcellulose, hydroxypropylcellulose, methylhydroxyalkylcellulose, soluble starch, hydroxyethylstarch, starch acetate, dextrane, polyvinyl aclohol and mixtures thereof.

13. Use of a combination of substances according to one of the claims 9 to 12, **characterised in that** the oppositely charged polymer (C) is a cationic polysaccharide.

14. Use of a combination of substances according to claim 13, **characterised in that** the cationic polysaccharide is selected from chitosan, cationic starch and mixtures thereof and if necessary contains additions of at least one further cationic polymer, such as e. g. polydiallyldimethylammoniumchloride, polyethylene imine, polyvinylamine or polyacrylamide and/or of at least one cationic surfactant with quaternary ammonium groups and/or of at least one colourant with quaternary ammonium groups.

## Revendications

1. Pellicule protectrice polymère adhérant à un substrat, comprenant
1. un apprêt polymère soluble ou gonflable dans l'eau et sur celui-ci
2. une membrane polymère insoluble dans l'eau, mais perméable à la vapeur d'eau,
**caractérisée en ce que**
l'apprêt (1) contient au moins un polymère (A) contenant des groupes ioniques, soluble dans l'eau ou gonflable à l'eau, ainsi que le cas échéant en outre au moins un polymère (B) non chargé soluble dans l'eau ou gonflable à l'eau, ou est constitué de ce ou de ces composants, et **en ce que** la membrane polymère (2) présente un complexe de polyélectrolytes insoluble dans l'eau mais perméable à la vapeur d'eau du polymère ou des polymères (A) avec au moins un polymère (C) chargé de façon opposée, ou se compose de ces corps.

2. Pellicule protectrice polymère selon la revendication 1,
**caractérisée en ce que**
le polymère (A) set choisi parmi les polysaccharides naturels ou synthétiques, les dérivés de polysaccharides, les protéines et les mélanges de ces composés, et/ou **en ce que** le polymère (B) contenant des groupes non ioniques solubles dans l'eau ou gonflables à l'eau de l'apprêt est choisi parmi les polysaccharides et les dérivés de polysaccharides ainsi que leurs mélanges.

3. Pellicule protectrice polymère selon la revendication 2,
**caractérisée en ce que**
le polymère (A) est choisi parmi la carboxyméthyl cellulose, la sulfoéthyl cellulose, le sulfate de cellulose, le sulfate d'amidon, le phosphate d'amidon, le carboxyméthyl amidon, l'alginate, la pectine, la gélatine et leurs mélanges, et/ou **en ce que** le polymère (B) est choisi parmi la méthyl cellulose, l'hydroxyéthyl cellulose, l'hydroxypropyl cellulose, la méthylhydroxyalkyl cellulose, l'amidon soluble, l'hydroxyéthyl amidon, l'acétate d'amidon, le dextrane, l'alcool polyvinylique et leurs mélanges.

4. Pellicule protectrice polymère selon l'une des revendications 1 à 3,
**caractérisée en ce que**
le polymère (C) chargé de façon opposée est un polysaccharide cationique.

5. Pellicule protectrice polymère selon la revendication 4,
**caractérisée en ce que**
le polysaccharide cationique est choisi parmi le chitosane, l'amidon cationique et ses mélanges, et le cas échéant des additifs d'au moins un autre polymère cationique, comme par exemple le chlorure de polydiallyl diméthyl ammonium, la polyéthylène imine, la polyvinylamine ou le polyacrylamide et/ou contient au moins un agent tensioactif cationique avec des groupes ammonium quaternaire et/ou au moins un colorant avec des groupes ammonium quaternaire.

6. Procédé de production d'une pellicule productrice polymère selon l'une des revendications 1 à 5,
**caractérisé en ce qu'**
on dépose, de préférence **en ce qu'**on pulvérise, une solution ou dispersion des composants polymères (A) et le cas échéant (B) pour l'apprêt sur le substrat choisi, **en ce qu'**on sèche de manière intermédiaire le cas échéant la couche ainsi produite puis **en ce qu'**on dépose une solution ou dispersion du composant polymère (C) ionique chargé de façon opposée, de préférence **en ce qu'**on la pulvérise, après quoi on sèche la pellicule produite.

7. Procédé selon la revendication 6,
**caractérisé en ce qu'**
on dépose une solution ou dispersion à 0,5-20 % massique des composants polymères (A) et le cas échéant (B) en une quantité totale de 100 à 1000 g/m² et/ou **en ce qu'**on dépose une solution ou dispersion à 0,5 à 20 % massique du composant polymère (C) en une quantité de 50 à 500 g/m².

8. Procédé de protection de surface dans le domaine intérieur et extérieur contre les salissures déposées volontairement ou l'action de la pollution de l'air,
**caractérisé en ce qu'**on dépose sur le substrat à protéger une pellicule protectrice polymère détachable par l'eau chaude ou par la vapeur chaude selon l'une des revendications 1 à 5.

9. Utilisation d'une combinaison de substances comprenant
1. au moins un polymère (A) soluble dans l'eau ou gonflable à l'eau contenant des groupes ioniques,
2. au moins un polymère (C) de charge opposée et
3. le cas échéant au moins un polymère (B) non chargé, les composants (A) et (B) pouvant être conditionnés ensemble ou séparément et le composant (B) étant conditionné séparément des autres composants,
pour la protection des surfaces dans le domaine intérieur et extérieur.

10. Utilisation d'une combinaison de substances selon la revendication 9,
dans laquelle
la protection des surfaces agit contre les salissures déposées volontairement comme les peintures ou analogues, ou est une protection contre l'action de la pollution de l'air.

11. Utilisation d'une combinaison de substances selon la revendication 9 ou 10,
**caractérisée en ce que**
le polymère (A) est choisi parmi les polysaccharides naturels ou synthétiques, les dérivés de polysaccharides, les protéines ou les mélanges de ces composants, et/ou **en ce que** le polymère (B) de l'apprêt, soluble dans l'eau ou gonflable à l'eau, contenant des groupes non ioniques, est choisi parmi les polysaccharides et les dérivés de polysaccharides ainsi que leurs mélanges.

12. Utilisation d'une combinaison de substances selon la revendication 11,
**caractérisée en ce que**
le polymère (A) est choisi parmi la carboxyméthyl cellulose, la sulfoéthyl cellulose, le sulfate de cellulose, le sulfate d'amidon, le phosphate d'amidon, le carboxyméthyl amidon, l'alginate, la pectine, le guar, les gélatines et leurs mélanges, et/ ou **en ce que** le polymère (1) est choisi parmi la méthyl cellulose, l'hydroxy éthyl cellulose, l'hydroxypropyl cellulose, la méthylhydroxy alkyl cellulose, l'amidon soluble, l'hydroxyéthyl amidon, l'acétate d'amidon, le dextrane, l'alcool polyvinylique et leurs mélanges.

13. Utilisation d'une combinaison de substances selon l'une des revendications 9 à 12,
**caractérisée en ce que**
le polymère (C) chargé de façon opposée est un polysaccharide cationique.

14. Utilisation d'une combinaison de substances selon la revendication 13,
**caractérisée en ce que**
le polysaccharide cationique est choisi le chitosane, l'amidon cationique et leurs mélanges, et le cas échéant des additifs d'au moins un autre polymère cationique, comme par exemple le chlorure de polydiallyl diméthyl ammonium, la polyéthylène imine, la polyvinylamine ou le polyacrylamide et/ ou contient au moins un agent tensioactif quaternaire avec des groupes ammonium quaternaires et au moins un colorant avec des groupes ammonium quaternaires.
